# EUROPEAN PATENT APPLICATION

(11) **EP 1 887 755 A1**
(43) Date of publication of application: **13.02.2008**
(21) Application number: 07100625.8
(22) Date of filing: 16.01.2007
(51) Int. Cl.: H04L 29/06, H04N 5/45, H04N 7/14, H04N 7/15

(54) **Apparatus for image display and control method thereof**

(30) Priority: 10.08.2006 KR 20060075869
(71) Applicant: Samsung Electronics Co., Ltd., Suwon-si 442-742 Gyeonggi-do (KR)
(72) Inventor: Oh, Zhang-hoon, Suwon-si, Gyeonggi-do (KR); Lee, Woo-hyoung, 114-1601 Yeonwon Maeul, Giheung-gu, Yongin-si, Gyeonggi-do (KR); Cha, Soon-back, Yeongtong-gu, Suwon-si, Gyeonggi-do (KR); Yang, Do-jun, Yongin-si, Gyeonggi-do (KR)
(74) Representative: Brandon, Paul Laurence

(57) **Abstract**

An image display apparatus (400) for controlling a picture in picture (PIP) function in a multi function monitor and a method thereof are provided. The image display apparatus for displaying an image based on a plurality of video signal includes: a processor (420) which receives at least one video signal and displays images; a signal processing unit (460) which receives combination information from the processor (420), the combination information comprising information regarding combinations of a plurality of video signals that can be displayed simultaneously by the image display apparatus; and a network unit (461), disposed in the signal processing unit, which transmits the received combination information through an external communication network, for example in a message according to the SIP and SDP protocols.

## Description

Apparatus and methods consistent with the present invention relate to image display apparatus for displaying an image based on a plurality of video signals, and control methods thereof

A Picture in Picture (PIP) function is one of a variety of screen reproduction methods used in conjunction with many monitors in accordance with the development of moving picture technologies and display apparatuses. The PIP function places a sub screen on a main screen of a display apparatus, thereby providing a viewer with the contents of the two screens: the main screen and the sub screen.

According to related art technology for PIP function in a monitor, a new screen is displayed over another screen in a PIP region on the screen of a monitor by a PIP on or off input of a user. That is, in order to use the PIP function, a PIP source is selected and then, if PIP ON is selected, the PIP source screen is display in the PIP region while a personal computer (PC) screen is displayed thereunder on the monitor. The PIP function has an advantage that a new screen can be seen in the PIP region on the monitor. However, the contents of the region of the main screen covered by the PIP picture cannot be viewed. In addition, in the case of a multi function monitor mentioned above, the PIP pictures from a plurality of external input signal terminals and a screen, including the face of a person at the other end connected through a Voice/Video over Internet Protocol (VoIP) call, are displayed through an internal codec. In this way, many screens are displayed together and the parts of the screen which are blocked increase.

A VoIP call enables a voice call using VoIP technology by which voice or video data is transmitted and received through data networks based on Internet protocol (IP), such as a local area network (LAN), a wide area network (WAN), and a virtual private network (VPN).

In a related art telephone line, once a line is occupied, it is impossible for other call data to be connected to the line and thus availability of the line is lowered and cost also increases. However, in the case of VoIP, a data line can be shared, cost is low, complicated telephone line layout is simplified, and very good scalability is provided. In addition, VoIP allows multiparty calls and can be used for remote conferencing systems.

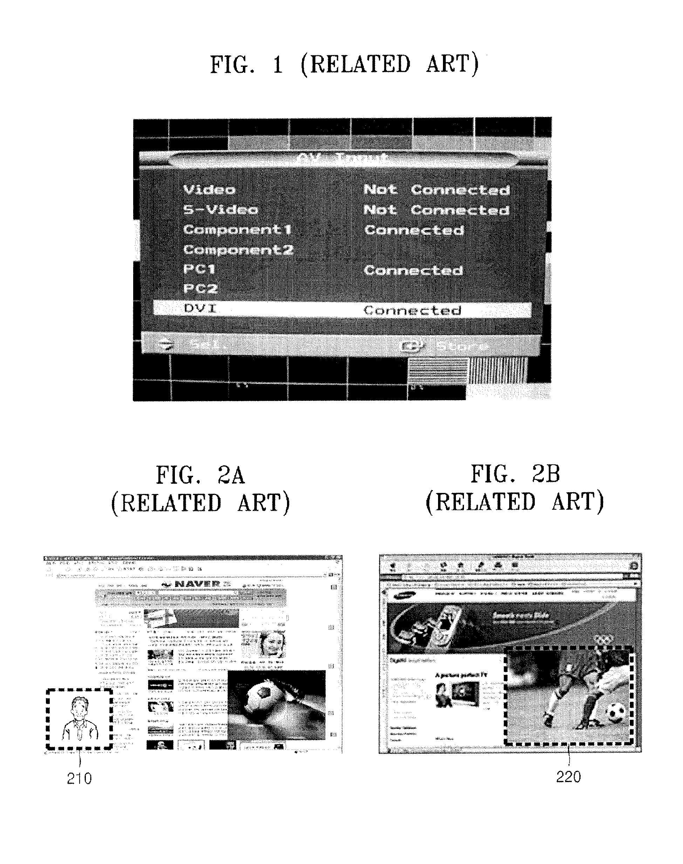

FIG. 1 is a diagram illustrating the connection states of external input signals according to related art technology.

Referring to FIG. 1, in the related art technology, the monitor displays only whether or not each external input signal is connected. When the PIP function is used with this related art monitor, the monitor cannot display all possible combinations of a plurality of video signals at the same time, but can display only some limited combinations. Accordingly, since the user cannot know which video signals can be simultaneously displayed with the video signal that the user has selected as the main screen, the user must select sub screens one by one and determine by a process of elimination which sub screens can be used. Ideally, the user should be able to access information regarding combinations of two video signals that can be simultaneously displayed on the monitor. Furthermore, this information should also be provided to a person at the other end of an ongoing communication, connected through VoIP, so that the person can also control a PIP screen.

FIG. 2 is a diagram illustrating a PIP screen according to related art technology.

Referring to FIG. 2A, a screen 210, including the face of a person at the other end of a session connected through VoIP, is positioned as a PIP screen in the bottom left hand corner of the monitor screen. Referring to FIG. 2B, a TV screen 220 according to a monitor external input signal is displayed as a PIP screen in the bottom right hand corner of the monitor screen. In each case, a predetermined region of the main screen is overlapped by the sub screen and thus the contents of this region of the main screen cannot be viewed. Furthermore, in a multi function monitor, if the PIP screens illustrated in FIGS. 2A and 2B are displayed simultaneously, the overlapping of PIP screens may cause serious inconvenience to the viewer. In addition, in the case of a voice call connected through VoIP, a person at the other end of the call may require control over the layouts of many PIP screens in relation to a function for simultaneously viewing many documents or in a video conference.

Exemplary embodiments of the present invention aim to provide an apparatus and method by which if a VoIP call is connected, combination information on possible combinations of PIP screens is received and the PIP screen of a person at the other end of the call is controlled. According to an aspect of the present invention, there is provided an image display apparatus for displaying an image based on a plurality of video signals, the apparatus including: a processor which receives at least one video signal and displays images; a signal processing unit which receives combination information from the processor, the combination information comprising information regarding combinations of a plurality of video signals that can be displayed simultaneously by the image display apparatus; and a network unit, disposed in the signal processing unit, which transmits the combination information through an external communication network.

The plurality of video signals that can be displayed simultaneously by the apparatus may include a main video signal and a sub video signal.

The combination information may be information regarding possible combinations based on the input video signals received by the apparatus.

The combination information may include position information related to the sub video signal received by the apparatus.

The apparatus may further include a combination information processing unit, disposed between the processor and the signal processing unit, which processes the combination information. The combination information processing unit includes: a combination information storage unit which stores the combination information; and a processor control unit which controls the main video signals and the sub video signals according to a control signal transmitted through the external communication network.

The network unit may further include a message control unit which processes the combination information received from the combination information storage unit, into a message in order to transmit the combination information through the external communication network.

The message may comply with a session initiation protocol and a session description protocol. According to another aspect of the present invention, there is provided an image display apparatus including: a network unit which receives combination information from an external image display apparatus through an external communication network, the combination information comprising information regarding combinations of a plurality of video signals that can be displayed simultaneously by an external image display apparatus which displays an image based on the plurality of video signals; a combination information storage unit which stores the combination information; a processor which sends a control command by using the stored combination information; and a processor control unit which controls the plurality of video signals that can be displayed simultaneously by the external image display apparatus according to the control command.

The plurality of video signals that can be displayed simultaneously by the external image display apparatus may include a main video signal and a sub video signal.

The combination information may be information regarding possible combinations based on the input video signals received by the external image display apparatus.

The combination information may include position information related to the sub video signal received by the external image display apparatus.

The combination information may be received in the form of a message, and the network unit may further include a message control unit which extracts the combination information included in the message received through the external communication network.

The message may comply with a session initiation protocol (SIP) and a session description protocol (SDP).

According to another aspect of the present invention, there is provided a method of controlling an image display apparatus which displays an image based on a plurality of video signals, the method including: recognizing an input state of the plurality of video signals; storing combination information regarding the combinations of the plurality of video signals that can be displayed simultaneously by the image display apparatus, by using the input video signal information; and transmitting the combination information through an external communication network.

The recognizing the input state of the plurality of video signals may comprise recognizing one of the initial state of the inputs of the plurality of video signals and a change in a preset input state.

If the change of the preset input state is recognized, in the transmitting of the combination information through the external communication network, only combination information on combinations different from the previous combinations before the change may be transmitted as the message.

The plurality of video signals that can be displayed simultaneously by the image display apparatus may include a main video signal and a sub video signal.

The combination information may be information regarding possible combinations based on the input video signals received by the image display apparatus.

The combination information may include position information related to the sub video signal received by the apparatus.

The combination information may be transmitted in the form of a message which complies with a session initiation protocol and a session description protocol.

The combination information may be added to the message or a URI, allowing the combination information to be referred to.

According to another aspect of the present invention, there is provided a method of controlling an image display apparatus, the method including: receiving, from the external image display apparatus through an external communication network, combination information regarding combinations of a plurality of video signals that can be displayed simultaneously by an external image display apparatus which displays an image based on the plurality of video signals; storing the combination information; controlling the plurality of video signals that can be displayed simultaneously by the external image display apparatus according to the stored combination information.

The plurality of video signals that can be displayed simultaneously by the external image display apparatus may include a main video signal and a sub video signal.

The combination information may be information regarding possible combinations based on the input video signals received by the external image display apparatus.

The combination information may include position information related to the sub video signal received by the external image display apparatus.

The combination information may be received in the form of a message which complies with an SIP and an SDP.

The storing the received combination information may further include storing the combination information added to the received SIP/SDP message body or fetching and storing a uniform resource identifier allowing the received combination information to be referred to.

The controlling the plurality of video signals that can be displayed simultaneously by the external image display apparatus according to the stored combination information may further include confirming a valid right on the control.

The display positions or transparencies of the main video signal and the sub video signal may be adjusted using the combination information.

According to still another aspect of the present invention, there is provided a computer readable recording medium having embodied thereon a computer program for executing the methods of controlling an image display apparatus for displaying an image based on a plurality of video signals according to preceding aspects of the invention.

The present invention will become more apparent by the following detailed description of exemplary embodiments thereof with reference to the attached drawings in which:
FIG. 1 is a diagram illustrating the connection states of external input signals according to related art technology;
FIGS. 2A and 2B are diagrams illustrating a picture in picture (PIP) screen according to the related art technology;
FIG. 3 is a schematic diagram illustrating screens displayed by image display apparatuses when a video conference using external communication networks is held;
FIG. 4 is a schematic functional block diagram illustrating a structure of an image display apparatus according to an exemplary embodiment of the present invention;
FIG. 5 is a detailed functional block diagram illustrating a structure for communication between a processor and a signal processing unit illustrated in FIG. 4 according to an exemplary embodiment of the present invention;
FIG. 6 is a diagram illustrating a possible combination of main screen signals and sub screen signals according to an exemplary embodiment of the present invention;
FIGS. 7A and 7B are flowcharts illustrating a method of controlling an image display apparatus according to an exemplary embodiment of the present invention, in which FIG. 7A illustrates a procedure performed in a transmission side, and FIG. 7B illustrates a procedure performed in a reception side;
FIG. 8 is a detailed flowchart of operation 730 illustrated in FIG. 7A and operation 750 illustrated in FIG. 7B according to an exemplary embodiment of the present invention;
FIG. 9 is a sequence diagram illustrating transmission of an INVITE message according to an exemplary embodiment of the present invention;
FIG. 10 is a diagram illustrating a source code of a session description protocol (SDP) message when the INVITE message illustrated in FIG. 9 is transmitted according to an exemplary embodiment of the present invention;
FIG. 11 is a sequence diagram illustrating transmission of an INFO message according to another exemplary embodiment of the present invention;
FIG. 12 is a diagram illustrating a source code of a session initiation protocol (SIP) info message body illustrated in FIG. 11 according to an exemplary embodiment of the present invention;
FIG. 13 is a flowchart illustrating changes of PIP control modes according to an exemplary embodiment of the present invention;
FIG. 14 is a flowchart illustrating a method of controlling an image display apparatus by an authorized person according to an exemplary embodiment of the present invention; and
FIG. 15 is a flowchart illustrating a PIP control mode by a local user when a session is connected according to an exemplary embodiment of the present invention.

The present invention will now be described more fully with reference to the accompanying drawings, in which exemplary embodiments of the invention are shown.

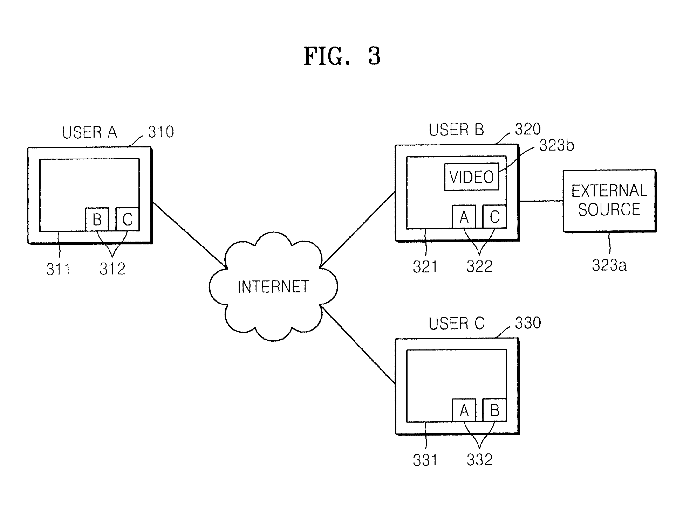

FIG. 3 is a schematic diagram illustrating screens displayed by image display apparatuses when a video conference using external communication networks is held.

Referring to FIG. 3, users A, B, and C are in a state in which they can be connected through the Internet, and in FIG. 3, they are in a video conference. In the monitor 310 of user A, the faces of users B and C are displayed as PIP screens 312 in addition to the main screen 311. There may be one or a plurality of PIP screens 312 according to the conference situation. Likewise, in the monitors 320 and 330 of users B and C, PIP screens 322 and 332 are displayed in addition to the main screens 321 and 331. If user B connects to an external input source 323A, such as a video signal, the PIP screen 323B of the video signal can be displayed on the monitor 320 of user B. In this case, for example, if user A is the chairperson of the conference, user A has no way of knowing what is being displayed on the monitor of user B, and thus user A has to continue to preside over the conference without awareness of this situation. At this time, since the PIP screen region of the video signal displayed according to the external input source on the monitor 320 of user B overlaps with the main screen 321, user B cannot view the contents of the region of the main screen 321 and thus the conference may not proceed smoothly.

Also, the screen 322 of the face of user A on the monitor 320 of user B may be covered by the video screen 323B. This situation may be one that the chairperson user A does not want to happen, and in this case, user A needs to be able to control the situation properly. According to the embodiments of present invention, in a video conference, remote control by user A is enabled. A structure of an image display apparatus for this will now be explained.

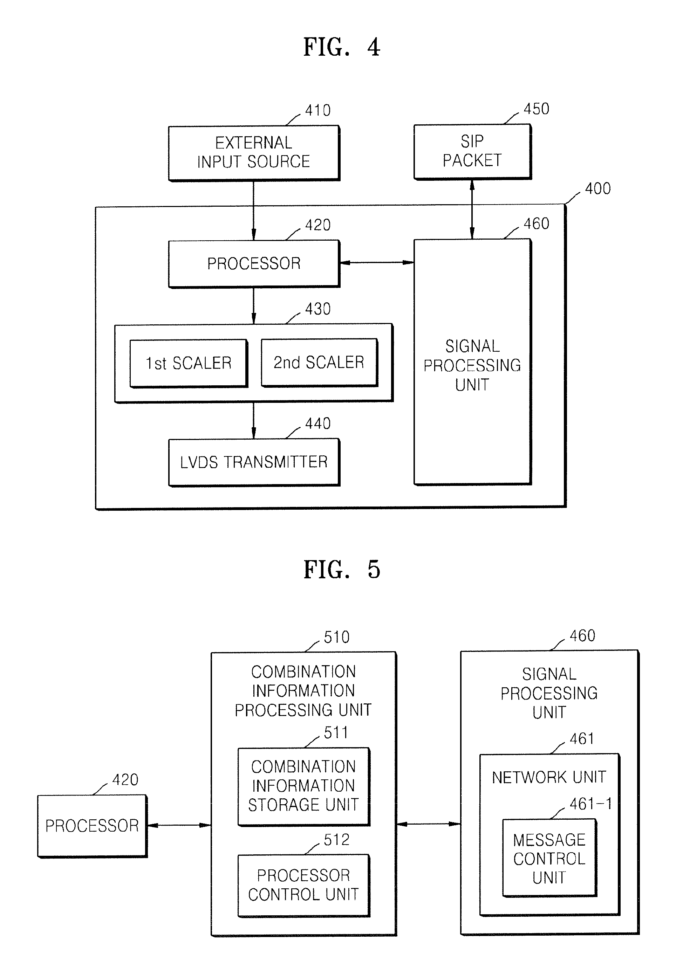

FIG. 4 is a schematic functional block diagram illustrating a structure of an image display apparatus according to an exemplary embodiment of the present invention.

Referring to FIG. 4, the image display apparatus 400 includes a processor 420 and a signal processing unit 460, and may further include a scaler 430, and a low voltage differential signaling (LVDS) transmitter 440. There may be more than one scaler 430, as shown. The one or more scalers scale the resolution of a video signal appropriately according to control by the processor 420. The LVDS transmitter 440 is an interface which complies with a data transmission standard having a signal transmission rate of a maximum 655 Mbits per second based on TIA/EIA-644 and IEEE 1596.3 standards.

The image display apparatus 400 may be an ordinary personal computer monitor, and may also include a display apparatus capable of processing a video signal in a multimedia device, such as a personal data assistant (PDA), a notebook computer, and a portable multimedia player (PMP). Hereinafter, the image display apparatus 400 will be referred to as a "monitor". An external input source 410 is a resource which provides an input signal from outside the monitor 400, and may include 15 pin D-sub capabilities, DVI-D capabilities, CVBS capabilities, S-VIDEO capabilities, SCART Component capabilities, and RF Tuner capabilities.

The processor 420 may be an integrated circuit (IC) chip embedded in the monitor 400 for a variety of control functions, and is also referred to as a "micom". The processor 420 receives the external input signal and participates in control of image processing, such as analog-to-digital (AD) conversion and decoding, required to display the signal.

The signal processing unit 460 processes signal generation according to a message or voice/video data stream flowing in through the VoIP from an external communication network, such as a session initiation protocol (SIP) packet 450, a real time transport protocol (RTP) or user datagram protocol (UDP) packet. Accordingly, the signal processing unit 460 may have therein an embedded central processing unit (CPU) and its own codec chip and memory. For example, the signal processing unit 460 may receive a voice and/or video data stream through the VoIP, decode the data stream with its own codec, and display the data stream as a PIP screen on the monitor. Here, the voice and/or video data stream may be transferred as an RTP or UDP packet. Since the relation between a PIP screen from the external input source 410 generated by the processor 420 and the PIP screen of the signal processing unit 460 should be controlled, the signal processing unit 460 communicates with the processor 420. The communication between the signal processing unit 460 and the processor 420 will now be explained in more detail with reference to FIG. 5.

FIG. 5 is a detailed functional block diagram illustrating a structure for communication between the processor 420 and the signal processing unit 460 illustrated in FIG. 4 according to an exemplary embodiment of the present invention.

Referring to FIG. 5, for the communication between the processor 420 and the signal processing unit 460 in the monitor 400, a combination information processing unit 510 is disposed therebetween.

Transmission, by a transmitting side, of information regarding combinations of a plurality of video signals that can be displayed simultaneously by the monitor 400 will be explained.

The combination information processing unit 510 processes combination information regarding combinations of a plurality of video signals that can be displayed simultaneously by the monitor 400, and may further include a combination information storage unit 511 and a processor control unit 512. The signal processing unit 460 may further include a network unit 461 and a message control unit 461-1.

The combination information storage unit 511 reads the information regarding the combinations of a plurality of video signals that can be displayed simultaneously by the monitor 400, described above, from the processor 420 and stores the information. The stored combination information is transmitted to the other side of a VoIP connection as a message through the external communication network through the message control unit 461-1 in the network unit 461 disposed in the signal processing unit 460. Also, if a new external input signal is sensed by the processor 420 and an event occurs, new combination information for the event is updated and stored in the combination information storage unit 511.

The network unit 461 provides an interface with an external communication network, including IP based data networks, such as LAN, WAN, and VPN.

Through the network unit 461, communication with another monitor is enabled.

The message control unit 461-1 is disposed in the network unit 461, and processes the combination information received from the combination information storage unit 511, into a message to be transmitted through the external communication network. The message complies with a session initiation protocol (SIP) and a session description protocol (SDP). Also, the message control unit 461-1 may receive a control message by an authorized person at the other end of the VoIP connection. At this time, the message control unit 461-1 extracts a control source code included in the message and transfers the code to the processor control unit 512 in the combination information processing unit 510.

According to the contents of the control source code of the message received from the signal processing unit 460, the processor control unit 512 controls the processor 420 of the monitor 400, and adjusts the position and transparency of the PIP screen. The position of the PIP screen may be limited to specific regions including top left, bottom left, top right, bottom right, and none. Also, the position can be determined by X, Y coordinates, height, and width. The transparency of the PIP screen may be determined according to several gradations, such as opaque, high, medium, and low, or in more detailed gradations of 0~100 %.

Reception of the information regarding the combinations of a plurality of video signals that can be displayed simultaneously by the monitor, transmitted by the monitor at the other end of the VoIP connection will now be explained. The combination information included in the message is extracted in the message control unit 461-1 in the network unit 461, and transferred to the combination information processing unit 510, and stored in the combination information storage unit 511. By using the stored combination information, the processor 420 sends a control command for the position and transparency of the PIP screen of the monitor at the other end. According to the command of the processor 420, the processor control unit 512 performs processing of AD conversion and encoding in order to control the plurality of video signals that can be displayed simultaneously by the monitor at the other end. At this time, the message control unit 461-1 processes the control command into a message in order to transmit the control command through the external communication network.

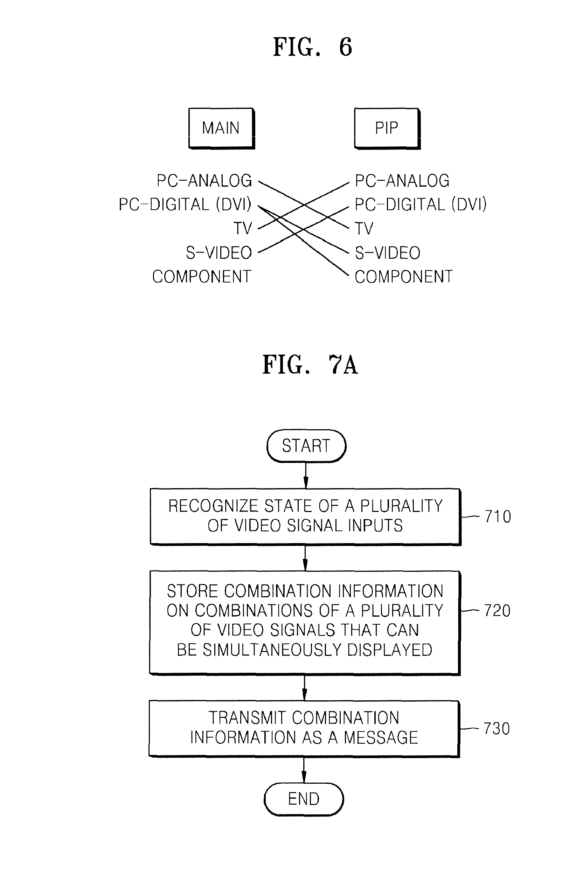

FIG. 6 is a diagram illustrating a possible combination of main screen signals and sub screen signals according to an exemplary embodiment of the present invention.

Referring to FIG. 6, the combination information includes information on the main screen, i.e., the main video signal, and the sub screen, i.e., the sub video signal, and this is illustrated as connection combinations of MAIN and PIP. According to the example illustrated in FIG. 6, when "PC-Digital (DVI)" is displayed as a main screen, only "S-Video" and "high definition multimedia interface (HDMI)" can be displayed simultaneously as sub screens. This information is transmitted to the monitor at the other end and the reception side monitor can control the PIP screens of the monitor at the transmission side based on the combination information.

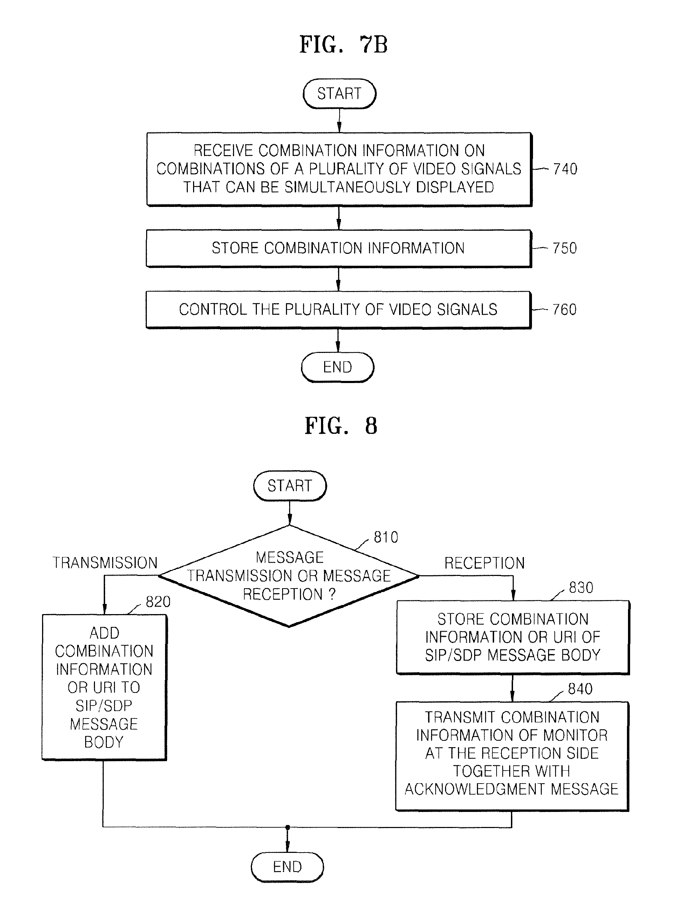

FIG. 7 is a flowchart illustrating a method of controlling an image display apparatus according to an exemplary embodiment of the present invention. FIG. 7A illustrates a procedure performed in a transmission side, and FIG. 7B illustrates a procedure performed in a reception side.

Referring to FIG. 7A, according to this exemplary embodiment, a method of controlling a monitor displaying an image based on a plurality of video signals includes recognizing an input state of the plurality of video signals in operation 710, storing combination information regarding the combinations of the plurality of video signals that can be displayed simultaneously by the monitor by using the input video signal information in operation 720, and transmitting the combination information through an external communication network in operation 730.

In operation 710, the initial input state of the plurality of video signals is recognized or a change in a preset input state is recognized. That is, by examining whether or not a signal of an external input source connected to the monitor is generated, the state is recognized or a changed ON or OFF state of the already generated signal is recognized.

In operation 720, the combination information on the combinations of the plurality of video signals that can be displayed simultaneously by the monitor is read through a processor, and stored. The stored combination information includes information regarding combinations of a plurality of video signals that can be simultaneously displayed by the monitor in itself, and information on possible combinations based on the actually generated input video signals.

In operation 730, the stored combination information is transmitted in the form of a message. The representative protocols that can be used include the SIP protocol and the SDP protocol. This will be explained in more detail later with reference to FIG. 8.

Referring to FIG. 7B, according to this exemplary embodiment, a method of controlling a monitor displaying an image based on a plurality of video signals includes receiving combination information on combinations of a plurality of video signals that can be displayed simultaneously by the monitor, through an external communication network in operation 740, storing the received combination information in operation 750, and controlling the plurality of video signals by using the stored combination information in operation 760.

In operation 740, the combination information on the combinations of the plurality of video signals that can be displayed simultaneously by the monitor at the other end is received.

In operation 750, the received combination information is stored. This will be explained in more detail later with reference to FIG. 8.

In operation 760, by using the stored combination information, the plurality of video signals of the monitor at the transmission side is controlled. That is, since the monitor at the reception side can know the external input sources, connection states, and the current state of PIP screens of the monitor at the other end, the monitor at the reception side adjusts the display positions or transparencies of the main video signal and sub video signal of the monitor at the transmission side, based on the combination information. Here, a confirmation procedure for confirming a control right (authority) should precede for the controlling.

FIG. 8 is a detailed flowchart of operation 730 illustrated in FIG. 7A and operation 750 illustrated in FIG. 7B according to an exemplary embodiment of the present invention.

Referring to FIG. 8, transmission of a message including combination information and reception of the message can be divided for explanation.

In the case of transmission of the message, when PIP combination information based on external input sources that are recognized by system A by examining a connection state, is transmitted to system B, the combination information is added to the body of an SIP/SDP message or a uniform resource identifier (URI), allowing the combination information to be referred to later, in operation 820. The SIP protocol is a signaling protocol of an application layer that specifies a procedure in which intelligent terminals that want to communicate with each other on the Internet, recognize each other, find the position of each other, and establish, terminate, and change a multimedia communication session. The SIP protocol has a request and response structure for controlling establishment, modification, and termination of a multimedia service session, such as an Internet-based video conference, telephone, voice mail, event notification, and instant messaging (short message server, SMS).

The SIP protocol can be used for both TCP and UDP. The SIP protocol uses an SIP URI similar to an email address in order to distinguish each user, and thus allows users to receive services without being dependent on an IP address. As a general example, information regarding a session is provided to a group of interest, by using a session advertise protocol (SAP), and through an SIP, a party desired to communicate with is invited to a session. Through an SDP, information on a media type desired to be used is exchanged. Also, by using an RTP described in the SDP, real time multimedia service is provided.

In the case of reception of the message, the combination information of the received SIP/SDP message is stored, or if a URI allowing the information to be referred to later is included, the URI is stored in operation 830. In the case of the URI, when CallLeg is generated later, the combination information can be fetched using the URI and stored. Also, when an approval message (200 OK message, i.e. acknowledgment message) is transmitted, the combination information of the monitor at the reception side can be transmitted together selectively in operation 840.

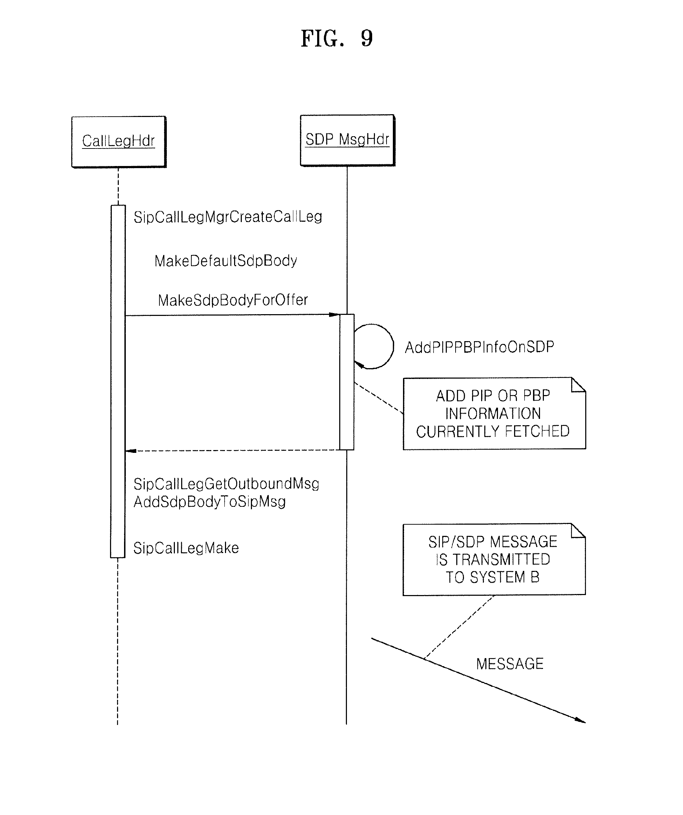

FIG. 9 is a sequence diagram illustrating transmission of an INVITE message according to an exemplary embodiment of the present invention. That is, FIG. 9 is a diagram illustrating when an attempt to establish an initial call connection is made.

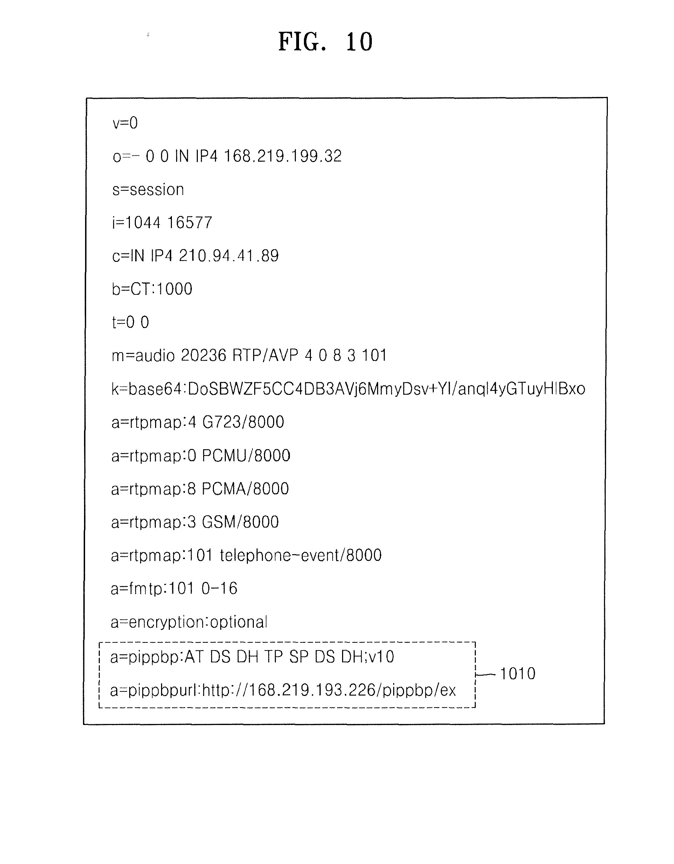

When the attempt to establish an initial connection from system A to system B is made, CallLegHdr and SDP MsgHdr add information regarding current possible combinations of a plurality of video signals, i.e., PIP combination information, to an SDP body, by using an INVITE method of an SIP. Then, an SIP/SDP message is transferred to system B. A source code added to the SDP body is illustrated in FIG. 10.

FIG. 10 is a diagram illustrating a source code of an SDP message when the INVITE message illustrated in FIG. 9 is transmitted according to an exemplary embodiment of the present invention. Referring to FIG. 10, the part 1010 indicated by a box of dotted lines is the part indicating the PIP combination information regarding current possible combinations in system A. As an example illustrated in FIG. 10, "AT" indicates a connection combination of Analog-PC and TV as described above with reference to FIG. 6. Also, URI information, "http://168.219.193.226", is the one that can be referred to by system B later for the combination information.

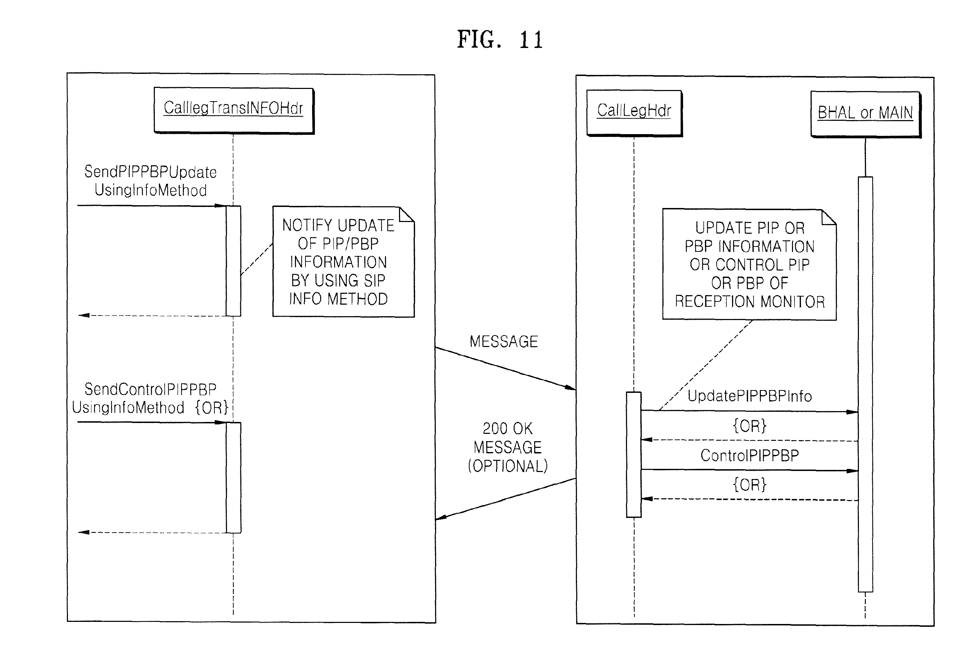

FIG. 11 is a sequence diagram illustrating transmission of an SIP INFO message when an event occurs according to another exemplary embodiment of the present invention. That is, when the state of an input signal changes and an event related to this occurs, only combination information different from the combination before the change is transmitted using a message. In other words, an updated source code of the PIP combination information of the monitor at the transmission side is added and transmitted using an SIP INFO method. In this case, by using an INFO method, a control message can be selectively transmitted. The monitor receiving the message updates the previous PIP combination information kept by the monitor or performs a control operation corresponding to the control message included in the combination information. Then, as described above in operation 840 illustrated in FIG. 8, when an approval message (200 OK) is transmitted, the PIP combination information of the monitor at the reception side may be transmitted together.

An example of the case where an event occurs and an SIP INFO message is transmitted is a case in which when the position of a PIP screen through a VoIP codec is changed, the contents of a source code as illustrated below are added to the message body and informed to the other end through an SIP INFO method:

```
        <?xml version="1.0" encoding="utf-8" ?>            //XML format content type
        <root>
         <ScreenStyle>
        <ScreenSizeX>1366</ScreenSizeX>                           //screen X axis size
        <ScreenSizeY>768</ScreenSizeY>                    //screen Y axis size
        <ScreenStartPositionX>0</ScreenStartPositionX>    //screen X axis start position
        <ScreenStartPositionY>385</ScreenStartPositionY>         //screen Y axis start
       position
        <ScreenEndPositionX>676</ScreenEndPositionX>//screen X axis end position
        <ScreenEndPositionY>768</ScreenEndPositionY>//screen Y axis end position
        <PIPStartPositionX>10</PIPStartPositionX>          //PIP X axis start position
        <PIPStartPositionY>395</PIPStartPositionY>         //PIP Y axis start position
        <PIPEndPositionX>140</PIPEndPositionX>             //PIP X axis end position
        <PIPEndPositionY>475</PIPEndPositionY>               //PIP Y axis end position
         </ScreenStyle>
        </root>
```

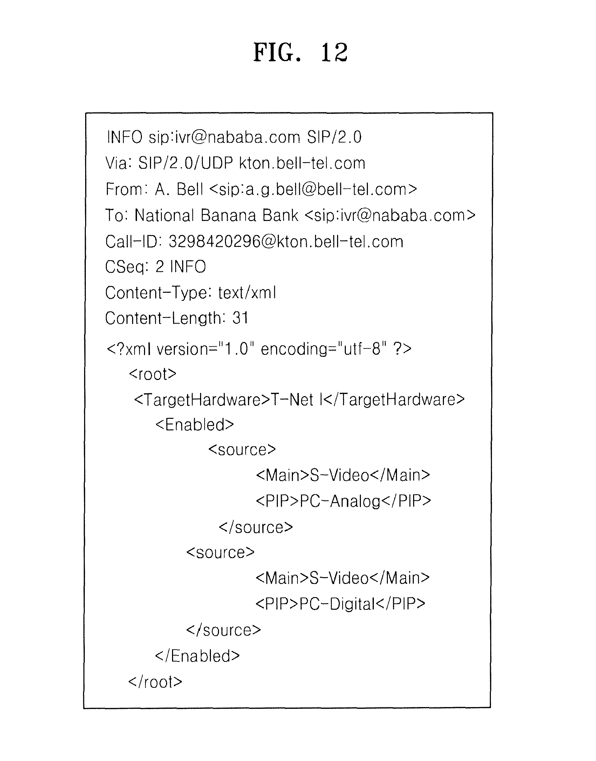

FIG. 12 is a diagram illustrating an example of a source code of the SIP info message body illustrated in FIG. 11 according to an exemplary embodiment of the present invention. By using an INFO method, the combination information can be informed in a content type extensible markup language (XML) format as illustrated in FIG. 12. As examples illustrated in FIG. 12, the main screen is "S-VIDEO" and the sub screen (PIP) is "PC-Analog", or the main screen is "S-VIDEO" and the sub screen is "PC-Digital".

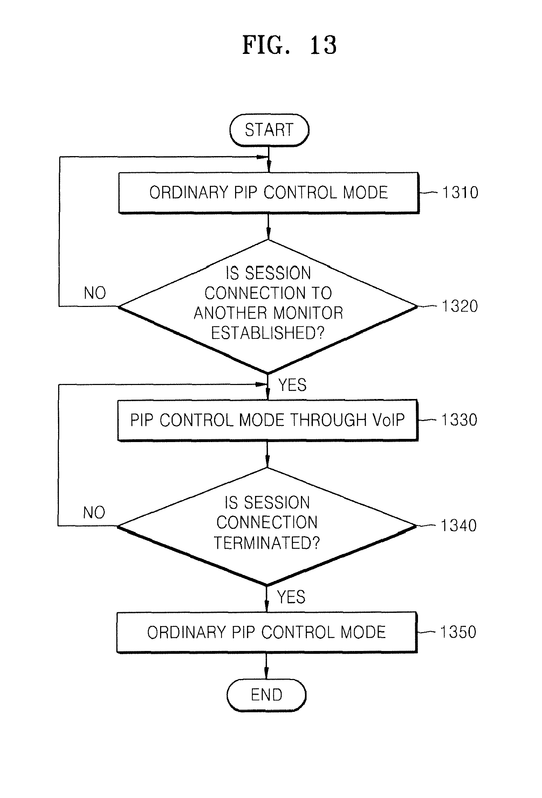

FIG. 13 is a flowchart illustrating changes of PIP control modes according to an exemplary embodiment of the present invention. Referring to FIG. 13, in a PIP control mode, it is determined whether or not a VoIP session with another system is connected in operation 1320. If the connection is not established, an ordinary PIP local manipulation is continuously performed in operation 1310. If the session is connected, from that time, conversation is performed in a PIP control mode in operation 1330. If the session connection is terminated in operation 1340, the operation mode is changed to the ordinary PIP local control mode in operation 1350.

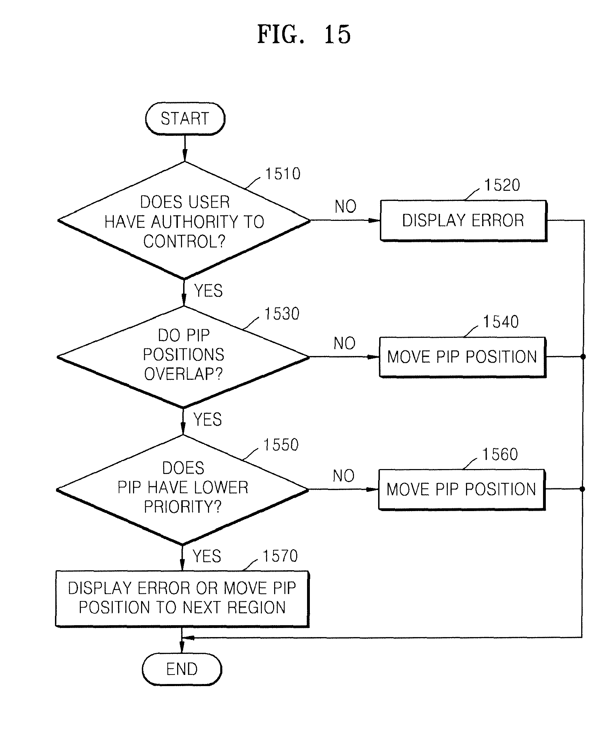

Operation 1330 will be explained later with reference to FIG. 15.

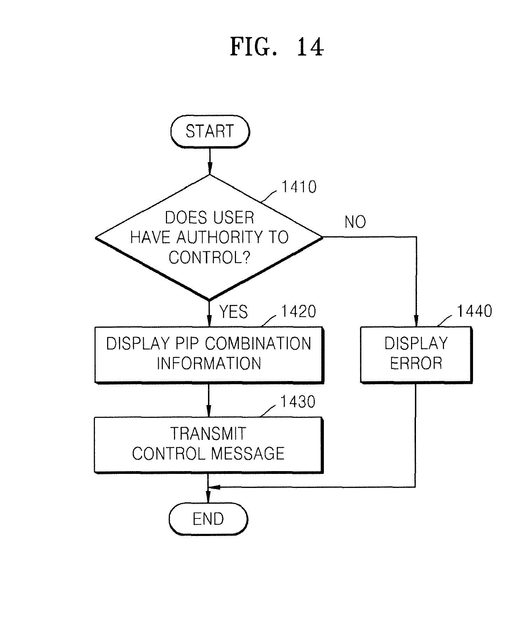

FIG. 14 is a flowchart illustrating a method of controlling an image display apparatus by an authorized person according to an exemplary embodiment of the present invention. Referring to FIG. 14, in a state in which a session is connected, it is first determined whether or not one side, which plans to control the PIP screen of the other side, has a control right in operation 1410. If the one side does not have the right, an error message is displayed in operation 1440, and if the one side has the right, PIP combination information is displayed in operation 1420.

By referring to a displayed list of PIP information on possible combinations, the user sends a PIP control command, and the command is transmitted to the monitor at the other end as a control message using an SIP INFO method in operation 1430.

FIG. 15 is a flowchart illustrating a PIP control mode by a local user when a session is connected according to an exemplary embodiment of the present invention. The local user is a person who wants to control the PIP screen of his/her external input sources. First, it is confirmed whether or not the user has a PIP control right in operation 1510. If the local user does not have the right, an error message indicating that the PIP cannot be manipulated is displayed in operation 1520. In this case, another user connected to the session has the right. Meanwhile, if the local user has the right, it is determined whether or not the monitor's own PIP screen (i.e. the PIP screen of external input sources) desired to be manipulated overlaps the PIP screen through the VoIP codec in the layout of the monitor screen in operation 1530. If the PIP screens do not overlap each other, the PIP screen desired to be moved is moved to the desired position in operation 1540. If the PIP screens overlap, it is determined which PIP screen has a higher priority in operation 1550. If the monitor's own PIP screen has a higher priority, it is moved to a desired position in operation 1560. If the monitor's own PIP screen has a lower priority, an error message indicating that the manipulation of the PIP screen is unsuccessful is displayed, or the position of the PIP screen is moved to a next region in a predetermined number of regions, such as top left, bottom left, top right, and bottom right regions in operation 1570. In this way, overlapping of the monitor's own PIP screen and the PIP screen through the VoIP codec can be prevented.

According to the image display apparatus for displaying an image based on a plurality of video signals and the control method thereof according to exemplary embodiments of the present invention as described above, a chairperson of a video conference through the VoIP can remote control the PIP screen of another side during the conference. In this way, the chairperson can provide optimum screens to participants of the video conference while presiding over the conference. Other participants of the video conference can view the screens including the PIP screens appropriately adjusted by the chairperson, i.e., the optimum screens. Also, by using SIP messages, it is possible to avoid a procedure of separately establishing a communication line for control. Furthermore, when an SIP INVITE message is processed, most of PIP combination information is exchanged and later only necessary information is exchanged partially using an SIP INFO message, thereby saving a network bandwidth.

The method of controlling the image display apparatus displaying an image based on a plurality of video signals according to the exemplary embodiments of present invention can also be embodied as computer readable codes on a computer readable recording medium.

The computer readable recording medium is any data storage device that can store data which can be thereafter read by a computer system. Examples of computer readable recording media include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.#

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image display apparatus (400) comprising:
a processor (420) which receives at least one video signal and displays images;
a signal processing unit (460) which receives combination information from the processor, the combination information comprising information regarding combinations of a plurality of video signals that can be displayed simultaneously by the image display apparatus; and
a network unit (461), disposed in the signal processing unit, which transmits the combination information through an external communication network.

2. The apparatus (400) of claim 1, wherein the plurality of video signals that can be displayed simultaneously by the apparatus comprises a main video signal and a sub video signal.

3. The apparatus (400) of claim 2, wherein the combination information comprises information regarding possible combinations based on an input video signal received by the image display apparatus.

4. The apparatus (400) of claim 3, wherein the combination information comprises position information related to the sub video signal received by the image display apparatus.

5. The apparatus (400) of any one of claims 2-4, further comprising a combination information processing unit (510), disposed between the processor (420)and the signal processing unit (460), which processes the combination information,
wherein the combination information processing unit comprises:
a combination information storage unit (511) which stores the combination information; and
a processor control unit (512) which controls the main video signal and the sub video signal according to a control signal transmitted through the external communication network.

6. The apparatus (400) of claim 5, wherein the network unit (461) further comprises a message control unit (461-1) which processes the combination information received from the combination information storage unit, into a message and transmits the combination information through the external communication network.

7. The apparatus (400) of claim 6, wherein the message complies with a session initiation protocol (SIP) and a session description protocol (SDP).

8. An image display apparatus (400) comprising:
a network unit (461) which receives combination information from an external display apparatus through an external communication network, the combination information comprising information regarding combinations of a plurality of video signals that can be displayed simultaneously by the external image display apparatus;
a combination information storage unit (510) which stores the combination information;
a processor (420) which sends a control command based on the stored combination information; and
a processor control unit (512) which controls the plurality of video signals that can be displayed simultaneously by the external image display apparatus (323a) according to the control command.

9. The apparatus (400) of claim 8, wherein the plurality of video signals that can be displayed simultaneously by the external image display apparatus comprises a main video signal and a sub video signal.

10. The apparatus (400) of claim 9, wherein the combination information comprises information regarding possible combinations based on an input video signal received by the external image display apparatus (323a).

11. The apparatus (400) of claim 10, wherein the combination information comprises position information related to the sub video signal received by the external image display apparatus (323a).

12. The apparatus of any one of claims 8-11, wherein the combination information is received by the external display apparatus (323a) in the form of a message, and
the network unit (461) further comprises a message control unit (461-1) which extracts the combination information from the message.

13. The apparatus (400) of claim 12, wherein the message complies with a session initiation protocol and a session description protocol.

14. A method of controlling an image display apparatus which displays an image based on a plurality of video signals, the method comprising:
recognizing an input state of the plurality of video signals;
storing combination information regarding combinations of the plurality of video signals that can be displayed simultaneously by the image display apparatus, by using information from an input video signal; and
transmitting the combination information through an external communication network.

15. The method of claim 14, wherein the recognizing the input state of the plurality of video signals comprises one of recognizing an initial state of the inputs of the plurality of video signals and recognizing a change in a preset input state.

16. The method of claim 15, wherein if the change of the preset input state is recognized, the transmitting the combination information through the external communication network comprises transmitting combination information regarding combinations different from previous combinations before the recognized change.

17. The method of any one of claims 14-16, wherein the plurality of video signals that can be displayed simultaneously by the image display apparatus comprises a main video signal and a sub video signal.

18. The method of claim 17, wherein the combination information comprises information regarding possible combinations based on the input video signal received by the image display apparatus.

19. The method of claim 18, wherein the combination information comprises position information related to the sub video signal received by the apparatus.

20. The method of any one of claims 14-19, wherein the transmitting the combination information through the external communication network comprises transmitting the combination information in the form of a message which complies with a session initiation protocol and a session description protocol.

21. The method of claim 20, wherein the transmitting the combination information through the external communication network further comprises one of adding the combination information to the message and adding a uniform resource identifier (URI) allowing the combination information to be referred to.

22. A method of controlling an image display apparatus, the method comprising:
receiving combination information from an external image display apparatus through an external communication network, the combination information comprising information regarding combinations of a plurality of video signals that can be displayed simultaneously by the external image display apparatus which displays an image based on the plurality of video signals;
storing the combination information; and
controlling the plurality of video signals that can be displayed simultaneously by the external image display apparatus based on the stored combination information.

23. The method of claim 22, wherein the plurality of video signals that can be displayed simultaneously by the external image display apparatus includes a main video signal and a sub video signal.

24. The method of claim 23, wherein the combination information comprises information regarding possible combinations based on the input video signal received by the external image display apparatus.

25. The method of claim 24, wherein the combination information comprises position information related to the sub video signal received by the external image display apparatus.

26. The method of any one of claims 22-25, wherein the receiving the combination information comprises receiving the combination information in the form of a message which complies with a session initiation protocol and a session description protocol.

27. The method of claim 26, wherein the storing the received combination information further comprises one of storing the combination information added to the message body and fetching and storing a uniform resource identifier allowing the received combination information to be referred to.

28. The method of any one of claims 22-27, wherein controlling the plurality of video signals that can be displayed simultaneously by the external image display apparatus further comprises confirming a valid right on the control.

29. The method of claim 28, wherein the controlling of the plurality of video signals that can be displayed simultaneously comprises adjusting one of the display positions of the main video signal and the sub video signal and the transparencies of the main video signal and the sub video signal, using the combination information.

30. A computer readable recording medium having embodied thereon a computer program for executing the method of claim 14 or claim 22.
